# EUROPÄISCHE PATENTSCHRIFT

(11) **EP 3 344 546 B1**
(45) Veröffentlichungstag und Bekanntmachung des Hinweises auf die Patenterteilung: **04.09.2019**
(21) Anmeldenummer: 16741294.9
(22) Anmeldetag: 15.07.2016
(51) Int. Cl.: B64G 1/28, F16C 33/66

(54) **DRALLRADVORRICHTUNG ZUR LAGESTABILISIERUNG EINES RAUMFLUGKÖRPERS**
FLYWHEEL DEVICE FOR POSITION STABILIZATION OF A SPACECRAFT
DISPOSITIF À ROUE D'INERTIE POUR LA STABILISATION D'UN ENGIN SPATIAL

(30) Priorität: 04.09.2015 DE 102015114819
(43) Veröffentlichungstag der Anmeldung: 11.07.2018
(73) Patentinhaber: Rockwell Collins Deutschland GmbH, 69123 Heidelberg (DE)
(72) Erfinder: EHINGER, Markus, 69469 Weinheim (DE)
(74) Vertreter: Müller Hoffmann & Partner
(86) Internationale Anmeldenummer: PCT/EP2016/066911
(87) Internationale Veröffentlichungsnummer: WO 2017/036654

(56) Entgegenhaltungen:
- GB-A- 1 216 597
- US-A- 4 285 553

## Beschreibung

Die Erfindung betrifft eine Drallradvorrichtung zur Lagestabilisierung eines Raumflugkörpers, insbesondere zur Lageregelung von Satelliten.

Derartige Drallradvorrichtungen beziehungsweise Schwungräder sind bekannt. Das Drallrad wird durch einen Antrieb in Rotation versetzt, so dass durch die Kreiselwirkung der stabilisierende Effekt erreicht werden kann. Um einen wirksamen Kreiseleffekt zu erzielen, ist es zweckmäßig, einen möglichst großen Teil der Masse des Schwungrads möglichst weit außen zu positionieren, so dass diese Masse mit möglichst großem Durchmesser um die Drehachse des Schwungrads rotieren kann.

Aus der DE 39 21 765 A1 ist ein derartiges Schwungrad bekannt, das - ähnlich dem Rad eines Fahrrads - einen innen liegenden Stator, einen außen liegenden Rotor und eine den Rotor mittels Speichen auf dem Stator drehbar tragende Nabe aufweist. Die Nabe ist durch zwei Wälzlager auf dem Stator drehbar abgestützt.

Derartige auch als Reaktionsräder bezeichnete Drallräder haben sich über Jahrzehnte für die Lageregelung von Satelliten bewährt. Die Lagerung des Rotors erfolgt dabei üblicherweise über mindestens zwei Wälzlager, die als ein Fest- und ein Loslager gestaltet sind.

Dokument US 4 285 553 offenbart eine Drallradvorrichtung mit einer magnetischen Lagerung und einem magnetischen Antrieb.

Der Erfindung liegt die Aufgabe zugrunde, eine Drallradvorrichtung anzugeben, bei der der Aufbau gegenüber bekannten Drallradvorrichtungen vereinfacht und die Herstellkosten reduziert sind.

Die Aufgabe wird erfindungsgemäß durch eine Drallradvorrichtung mit den Merkmalen von Anspruch 1 gelöst. Vorteilhafte Ausgestaltungen sind den abhängigen Ansprüchen zu entnehmen.

Eine Drallradvorrichtung zur Lagestabilisierung eines Raumflugkörpers weist auf einen Träger, einen Rotor, einen Magnetantrieb zum drehenden Antreiben des Rotors relativ zu dem Träger, und ein zwischen dem Rotor und dem Träger angeordnetes Wälzlager. Dabei ist durch den Magnetantrieb eine magnetische Kraft zwischen dem Rotor und dem Träger erzeugbar, zum Vorspannen des Wälzlagers. Der Außendurchmesser des Rotors beträgt maximal das 2,5-fache des Wälzlagerdurchmessers.

Somit wird der Rotor auf dem Träger durch den Magnetantrieb drehend angetrieben, wodurch der gewünschte Kreiselstabilisierungs-Effekt erreicht wird. Der Rotor ist durch das Wälzlager relativ zu dem Träger drehbar gelagert. Wenn aber nur ein Wälzlager vorgesehen ist, kann auf diese Weise zunächst keine statisch bestimmte Lagerung erreicht werden.

Die statische Bestimmung wird dadurch erreicht, dass der Magnetantrieb eine magnetische Kraft zwischen dem Rotor und dem Träger bewirkt. Bei dieser magnetischen Kraft handelt es sich insbesondere um eine Anziehungskraft, die den Rotor an den Träger anzieht. Auf diese Weise wird das Wälzlager vorgespannt.

Die Lagerung des Rotors auf dem Träger entspricht somit in gewisser Weise einer Kombination eines mechanischen Lagers (Wälzlager) mit einem Magnetlager, das durch den Magnetantrieb gebildet wird.

Die Gestaltung ermöglicht es, das Wälzlager sehr viel größer auszugestalten, als dies aus dem Stand der Technik bekannt ist. Während beim Stand der Technik der Außendurchmesser des Rotors zum Beispiel etwa mehr als das 5-fache oder auch mehr als das 10-fach des Wälzlagerdurchmessers betragen kann, sind bei der hier beschriebenen Drallradvorrichtung der Außendurchmesser des Rotors und der Wälzlagerdurchmesser angenähert.

Unter dem Wälzlagerdurchmesser ist dabei der Durchmesser des Kreises zu verstehen, auf dem sich die Schwerpunkte der Wälzkörper beim Drehen des Rotors bewegen. Wenn es sich bei den Wälzkörpern zum Beispiel um Kugeln handelt, entspricht der Wälzlagerdurchmesser dem Durchmesser des Kreises, auf dem die Kugelmittelpunkte umlaufen. Bei anderen Wälzkörpern gilt entsprechendes.

Je nach Ausführungsform kann der Rotor derart gestaltet sein, dass der Außendurchmesser des Rotors ausgewählt ist aus der Gruppe maximal das 2-fache des Wälzlagerdurchmessers, maximal das 1,5-fache des Wälzlagerdurchmessers, maximal das 1,3-fache des Wälzlagerdurchmessers, maximal das 1,2-fache des Wälzlagerdurchmessers. Der Außendurchmesser kann somit je nach Ausführungsform maximal das 2-fache oder maximal das 1,5-fache oder maximal das 1,3-fache oder maximal das 1,2-fache oder maximal das 1,0-fache des Wälzlagerdurchmessers betragen.

Je geringer das Verhältnis zwischen Außendurchmesser des Rotors und Wälzlagerdurchmesser ist, desto mehr wird das Wälzlager im Verhältnis zum Rotor nach außen verlegt. Wie später noch gezeigt wird, kann es auf diese Weise möglich sein, den Rotor sogar durch den äußeren Lagerring des Wälzlagers zu bilden. In diesem Fall ist das Verhältnis zwischen Außendurchmesser des Rotors und Wälzlagerdurchmesser gering und beträgt zum Beispiel nur ca. 1,17, also weniger als 1,2.

Das Verhältnis kann sogar noch kleiner sein, und z.B. weniger als 1,0, z.B. 0,9 betragen. In diesem Fall ist folglich der Außendurchmesser des Rotors gleich wie oder kleiner als der Wälzlagerdurchmesser, so dass das Wälzlager in Relation zum Rotor eher außen liegt. Der Antrieb kann dann z.B. innerhalb des Innenrings des Wälzlagers angebracht werden.

Der Magnetantrieb kann einen an dem Rotor angeordneten, mehrere Magnetpole aufweisenden Magnetring aufweisen, sowie eine an dem Träger gegenüber von dem Magnetring angeordnete magnetische Rückschlusseinrichtung und an dem Träger zwischen dem Magnetring und der magnetischen Rückschlusseinrichtung angeordnete Magnetspulen. Der Magnetantrieb kann somit in an sich bekannter Weise aufgebaut sein und in der Art eines kreisförmig aufgebauten Linearmotors den Rotor relativ zu dem Träger rotieren.

Die zwischen dem Rotor und dem Träger wirkende magnetische Kraft kann insbesondere bei einem Betrieb der Drallradvorrichtung zwischen dem Magnetring und der Rückschlusseinrichtung erzeugbar sein. Die erforderliche magnetische Kraft wird dabei durch das Wälzlagerdesign, insbesondere die gewählte bzw. erforderliche Lagervorspannung, vorgegeben und muss bei der Auslegung des Magnetantriebs berücksichtigt werden. Durch die entsprechende Auslegung und Strombeaufschlagung des Magnetantriebs kann dann die gewünschte Lagervorspannung erreicht und gehalten werden. Zusätzlich kann die magnetisch erzeugte Vorspannung durch einen zusätzlichen Haltemagneten weiter verstärkt werden, wie später noch erläutert wird.

Wie oben bereits ausgeführt, ist es möglich, den Rotor mit nur genau einem Wälzlager auf dem Träger zu lagern. Anders als beim Stand der Technik ist somit ein zweites Wälzlager zum Erreichen einer statisch bestimmten Lagerung nicht erforderlich.

Gegebenenfalls kann das genau eine Wälzlager auch durch zwei dicht nebeneinander angeordnete Wälzkörper-Kreise (zum Beispiel Kugelringe) realisiert sein, die dann wie ein einziges Lager wirken. Damit kann eine erhöhte Tragfähigkeit des Wälzlagers erreicht werden. Entsprechende Wälzlager mit zwei Wälzkörper-Kreisen sind bei den einschlägigen Wälzlagerherstellern verfügbar und daher als solche bekannt. Sie weisen eine erhöhte Tragzahl auf und werden aber als nur ein Wälzlager betrachtet.

Das Wälzlager kann ausgebildet sein, um Radialkräfte und Axialkräfte aufzunehmen. Die Aufnahme von Axialkräften ist insbesondere auch deswegen sinnvoll, weil der Magnetantrieb seinerseits eine Axialkraft als Vorspannkraft für das Wälzlager erzeugt. Diese Axialkraft muss - zusammen mit weiteren Kräften, wie zum Beispiel der Gewichtskraft des Rotors - durch das Wälzlager aufgenommen werden.

Damit eignet sich für das Wälzlager zum Beispiel ein Axiallager, ein Spindellager, o.Ä.

Die Axialkräfte müssen von dem Wälzlager nur in eine Richtung aufgenommen werden, sofern sichergestellt ist, dass die durch den Magnetantrieb erzeugte Vorspannkraft stets ausreicht, um das Wälzlager vorzuspannen. Damit wird ein Auseinanderfallen des Wälzlagers gewährleistet.

Die Wälzkörper des Wälzlagers, zum Beispiel die Kugeln, können in einem Käfig geführt sein, der dann gleichzeitig auch zur Nachschmierung des Lagers eingesetzt werden kann. Die Nachschmierung kann auch durch ein eigenes Schmiersystem realisiert werden, bei dem wenigstens ein Teil der Komponenten auf dem sich drehenden Rotor oder auch in dem vom Rotor umschlossenen, freien Innenbereich angeordnet ist.

Das Wälzlager kann einen unteren Lagerring aufweisen, der an dem Träger angeordnet ist, und einen oberen Lagerring, der an dem Rotor angeordnet ist. Die Begriffe "unterer Lagerring" und "oberer Lagerring" sind an dieser Stelle willkürlich gewählt, um die beiden Lagerringe im Hinblick auf ihre Zuordnung unterscheiden zu können. Ebenso könnte zum Beispiel auch von einem "ersten Lagerring" und einem "zweiten Lagerring" die Rede sein. Bezüglich einer Orientierung im Raum ist die Bezeichnung "unterer" und "oberer" ohne Bedeutung.

Der obere Lagerring, an dem der Rotor angeordnet ist, kann bei einer Ausführungsform der äußere Lagerring sein, während dann der untere Lagerring den inneren Lagerring bildet. Ebenso kann bei einer Variante auch eine umgekehrte Anordnung gegeben sein, bei der der obere Lagerring dem inneren Lagerring entspricht und der untere Lagerring dem äußeren Lagerring.

Insbesondere der untere Lagerring, der an dem Träger angeordnet ist, kann bei einer Variante aus einem Keramikmaterial bestehen, um Gewicht zu sparen, was im Hinblick auf den vorgesehenen Einsatz der Drallradvorrichtung von erheblicher Bedeutung sein kann.

Der obere Lagerring kann einstückig an dem Rotor ausgebildet sein. Insbesondere können der obere Lagerring und der Rotor ein und dasselbe Teil sein, so dass der obere Lagerring integraler Bestandteil des Rotors ist. Der obere Lagerring dient dann somit selbst als Schwungmasse oder ist direkt in einen Schwungring (den Rotor) integriert. Der Lagerring dient dann als Träger für die Magnetpole.

Der obere Lagerring wird durch die magnetischen Motorkräfte in beziehungsweise gegen den unteren Lagerring gedrückt. Das Lager kann sich frei drehen und wird durch den integrierten Motor angetrieben. Der Magnetantrieb ersetzt somit ein zweites Wälzlager und vereinfacht auf diese Weise den Aufbau, so dass auch die Kosten reduziert werden können.

Bei der Verwendung von nur einem Wälzlager wird auch ein geringeres Laufgeräusch erzeugt. Durch den kompakten Aufbau der Drallradvorrichtung wird das Laufgeräusch auch nicht durch weitere Gehäuseresonanzen verstärkt, wie es typischerweise bei Drallrädern gemäß dem Stand der Technik der Fall ist. Ein aufwändiges Vorspannen der Wälzlager entfällt, da die Lagervorspannung durch den Magnetantrieb einstellbar ist. Damit wird auch die Montage vereinfacht.

Bei einer Ausführungsform kann an dem Rotor eine Zusatzmasse vorgesehen sein. Der Rotor stellt in diesem Fall den einen Lagerring des Wälzlagers dar und trägt - wie oben erläutert - den zu dem Magnetantrieb gehörenden Magnetring. Die Zusatzmasse kann als separates, zusätzliches Element an dem Rotor befestigt sein.

Insbesondere kann die Zusatzmasse als ein auf dem Rotor angeordneter Zusatzmassenring ausgebildet sein.

Die Erhöhung der Masse des Rotors ermöglicht es, stärkere Kreiselkräfte zu erzeugen, die eine verstärkte Lagestabilisierung des Raumflugkörpers erreicht. Dies ist insbesondere dann zweckmäßig, wenn es sich bei dem Raumflugkörper um einen größeren Satelliten mit größerer Masse und damit größerer Trägheit handelt.

Das Bereitstellen der Zusatzmasse ermöglicht zum Beispiel auch einen modularen Aufbau der Drallradvorrichtung. Wenn ein Einsatz der Drallradvorrichtung für kleinere, leichtere Satelliten geplant ist, genügt unter Umständen alleine der Rotor, um ausreichend starke Stabilisierungskräfte zu erzielen. Wenn ein Einsatz in einem größeren, schwereren Raumflugkörper vorgesehen ist, kann zusätzlich die Zusatzmasse angebracht werden.

Die Zusatzmasse kann aufgrund ihrer Gewichtskraft bei entsprechenden Gravitationsverhältnissen eine Kraft erzeugen, die der magnetischen Kraft durch den Magnetantrieb entgegengesetzt wirkt und damit bewirkt, dass das Wälzlager auseinandergezogen wird beziehungsweise getrennt wird. Für diesen Fall kann es zweckmäßig sein, wenn an dem Rotor oder auf dem Träger ein zwischen dem Rotor und dem Träger wirkender Haltemagnet angeordnet ist, zum Bewirken einer magnetischen Haltekraft zwischen dem Rotor und dem Träger.

Bei dem Haltemagnet kann es sich zum Beispiel um einen Haltemagnetring handeln, der an dem Rotor befestigt ist. Der Haltemagnetring kann zum Beispiel auch im Inneren des Rotors angebracht werden.

Die von dem Haltemagnet ausgeübte Haltekraft ist eine Anziehungskraft zum Zusammenhalten von Rotor und Träger, wenn die magnetische Kraft des Magnetantriebs nicht ausreicht, um den schweren und gegebenenfalls sogar durch eine Zusatzmasse zusätzlich beschwerten Rotor zuverlässig auf dem Träger zu halten.

Es kann eine Schmiervorrichtung zum Schmieren des Wälzlagers vorgesehen sein. Dabei kann es sich z.B. um einen oben bereits erläuterten Käfig handeln, der gleichzeitig auch die Wälzkörper in ihrer jeweiligen Position hält. Ebenso ist es möglich, dass die Schmiervorrichtung auf dem sich drehenden Rotor oder in dem freien, vom Rotor umschlossenen Innenbereich angeordnet ist und als Nachschmiersystem dient. Insbesondere kann die Schmiervorrichtung aktiv oder passiv wirkend aufgebaut sein.

So ist es bei einer passiven Schmiervorrichtung möglich, dass ein Schmiermittel, z.B. Öl oder Lagerfett, aufgrund der Fliehkraftwirkung beim Rotieren des Rotors gefördert wird, um das Wälzlager zu schmieren. Ebenso ist eine Kapillarschmierung durch geeignete Kapillareinrichtungen möglich.

Bei einer aktiven Schmiervorrichtung kann eine Fördereinrichtung für das Schmiermittel vorgesehen sein. Dabei kann es sich z.B. um eine Schmiermittelpumpe handeln, z.B. auch unter Nutzung eines Piezoelements, das wie bei einem Einspritzsystem Schmiermittel fördert.

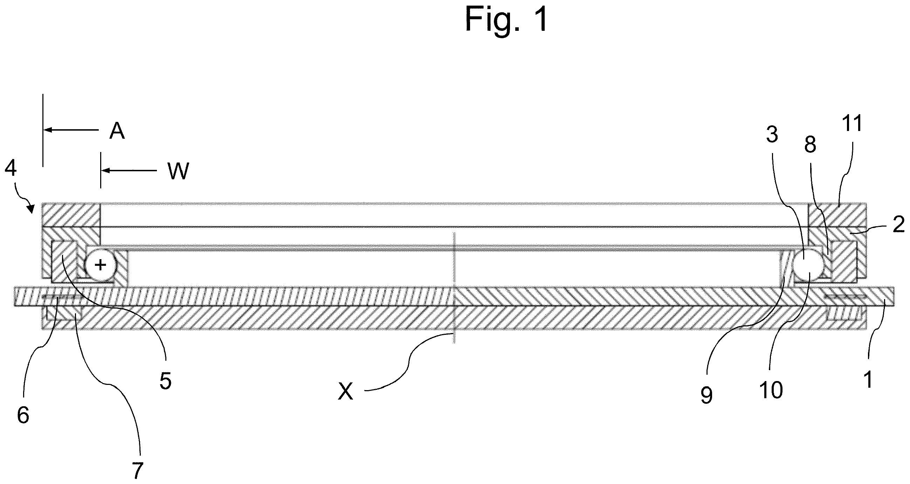

Diese und weitere Vorteile und Merkmale werden nachfolgend anhand eines Beispiels unter Zuhilfenahme der begleitenden Figur näher erläutert. Es zeigt
- **Figur 1**: einen Schnitt durch eine Drallradvorrichtung.

Figur 1 zeigt in Schnittdarstellung eine Drallradvorrichtung zur Lagestabilisierung eines Raumflugkörpers wie zum Beispiel eines Satelliten.

Die Drallradvorrichtung weist einen Träger 1 auf, der einen Rotor 2 drehbar trägt.

Der Träger 1 sollte eine ausreichende Stabilität und insbesondere eine Verwindungssteifigkeit aufweisen, um den Rotor 2 auch bei den im Betrieb wirkenden Kräften zuverlässig tragen zu können.

Der Rotor 2 ist über ein Wälzlager 3 auf dem Träger 1 gelagert. Der Rotor 2 stellt das eigentliche Schwungrad beziehungsweise Drallrad dar, das in Betrieb mit hoher Drehzahl rotiert wird und dadurch die gewünschten Kreiselkräfte zur Stabilisierung des Raumflugkörpers erzeugt.

Der Rotor 2 weist einen geeigneten Durchmesser, zum Beispiel bis zu 200 mm oder auch mehr auf. Aufgrund der Tatsache, dass die gesamte Masse des Rotors 2 außen, also entfernt von der Mittelachse X liegt, können mit hoher Effektivität die gewünschten Kreiselkräfte erzeugt werden.

Zum drehenden Antreiben des Rotors 2 relativ zu dem Träger 1 ist ein Magnetantrieb 4 vorgesehen. Der Magnetantrieb 4 weist einen Magnetring 5 auf, der von dem Rotor 2 getragen wird und eine entsprechende Anzahl von Magnetpolen aufweist.

Weiterhin weist der Magnetantrieb 4 mehrere Magnetspulen 6 auf, die in geeigneter Weise in oder an dem Träger 1 angeordnet sind und durch eine nicht dargestellte Steuerung ansteuerbar sind.

Weiterhin ist auf der Rückseite des Trägers 1 eine magnetische Rückschlusseinrichtung 7 ebenfalls als Teil des Magnetantriebs 4 vorgesehen.

Der Magnetantrieb 4 stellt im Prinzip einen magnetischen Linearmotor dar, der kreisförmig angeordnet ist. Die Steuerung steuert die Magnetspulen 6 in geeigneter Weise an, um mit den Magnetpolen im Magnetring 5 zusammenzuwirken und die Rotor 2 in Drehung zu versetzen. Der Aufbau eines derartigen Magnetantriebs 4 ist bekannt, so dass sich an dieser Stelle eine nähere Beschreibung erübrigt.

Die Steuerelektronik und insbesondere die für den Magnetantrieb 4 notwendigen weiteren Komponenten (Leistungselektronik etc.) können zum Beispiel in dem von dem Rotor 2 umschlossenen und - wie in Figur 1 erkennbar - frei bleibenden Raum auf dem Träger 1 angeordnet werden. Auf diese Weise ist ein sehr kompakter Aufbau der Drallradvorrichtung möglich. In diesem Raum können auch Komponenten eines als Schmiervorrichtung dienenden Nachschmiersystem angeordnet sein, welches z.B. ein Piezoelement zum Fördern von Schmiermittel für das Wälzlager 3 aufweist.

Bei dem Wälzlager 3 handelt es sich bei dem in Figur 1 gezeigten Beispiel um ein Rillenkugellager. Jedoch können auch andere Lagertypen, wie zum Beispiel Zylinderrollenlager, Tonnenlager etc., verwendet werden. Das Wälzlager 3 weist einen äußeren Lagerring 8 (auch als oberer Lagerring bezeichnet) sowie einen inneren Lagerring 9 (auch als unterer Lagerring bezeichnet) auf. Zwischen den beiden Lagerringen 8, 9 sind die Wälzkörper angeordnet, bei denen es sich in dem in Figur 1 gezeigten Beispiel um Kugeln 10 handelt.

Der äußere Lagerring 8 ist ein integraler Bestandteil des Rotors 2. Umgekehrt kann man auch sagen, dass der Rotor 2 bei dem in Fig. 1 gezeigten Beispiel durch den Lagerring 8 gebildet ist. Bei einem anderen, nicht in Fig. 1 gezeigten Beispiel kann der äußere Lagerring 8 auch durch ein separates Bauteil gebildet sein, das an dem Rotor 2 befestigt wird.

Für einen ordnungsgemäßen Betrieb des Wälzlagers 3 muss eine entsprechend ausreichende Zahl von Kugeln 10 gleichmäßig verteilt zwischen den Lagerringen 8, 9 angeordnet sein. Damit die Kugeln 10 einen gleichmäßigen Abstand über den Umfang zueinander aufweisen, sind die Kugeln 10 durch einen in der Figur 1 nicht gezeigten Lagerkäfig in üblicher Weise gehalten. Der Lagerkäfig kann nicht nur zum Halten den Kugeln 10 in ihren entsprechenden Positionen genutzt werden, sondern er kann auch dazu dienen, ein Schmiermittel bereitzustellen, um eine längere Schmierung des Wälzlagers 3 zu gewährleisten. Insbesondere bei dem Einsatz der Drallradvorrichtung in einem Satelliten wird in der Regel eine Lebensdauerschmierung anzustreben sein.

Die Schmierung kann auch z.B. Fliehkraftgetrieben sein und z.B. durch eine nicht gezeigte Schmiervorrichtung verwirklicht werden, die auf den rotierenden Teilen angeordnet ist. Ebenso kann eine Schmiervorrichtung in dem Freiraum im Inneren des Wälzlagers 3 vorgesehen sein, die z.B. eine Kapillarschmierung nutzt oder ein aktives Schmiersystem mit einer Schmiermittel-Fördereinrichtung. Bei der Schmiermittel-Fördereinrichtung kann es sich z.B. um ein Piezo-Einspritzelement handeln.

Der Rotor 2 und das Wälzlager 3 sind um die Mittelachse X rotationssymmetrisch angeordnet. Der Außendurchmesser A des Rotors 2 kann dabei nur geringfügig größer sein als der Wälzlagerdurchmesser W des Wälzlagers 3.

Der Wälzlagerdurchmesser W ist so definiert, dass er dem Durchmesser des Kreises entspricht, auf dem sich die Schwerpunkte der Wälzkörper (hier: der Kugeln 10) bewegen.

Je geringer das Verhältnis zwischen dem Außendurchmesser A des Rotors 2 und dem Wälzlagerdurchmesser W ist, desto effizienter, kompakter kann der Rotor 2 gestaltet sein. Zum Beispiel hat sich ein Verhältnis von maximal 1,5 als besonders geeignet erwiesen. Bei der in Figur 1 gezeigten, beispielhaften Drallradvorrichtung beträgt das Verhältnis zwischen dem Außendurchmesser A und dem Wälzlagerdurchmesser W knapp 1,2.

Wie bereits erläutert, erfolgt die mechanische Lagerung des Rotors 2 auf dem Träger 1 alleine durch ein einziges Wälzlager 3. Um ein Auseinanderfallen des Wälzlagers 3 zu verhindern und eine statisch bestimmte Lagerung zu ermöglichen, wird darüber hinaus durch den Magnetantrieb 4 eine magnetische Kraft zwischen dem Rotor 2 und dem Träger 1 erzeugt (Anziehungskraft). Diese magnetische Kraft muss ausreichend groß dimensioniert sein, um das Auseinanderfallen des Wälzlagers 3 zu verhindern.

Auf diese Weise kann die Drallradvorrichtung zuverlässig und stabil betrieben werden.

Bei dem in Figur 1 gezeigten Beispiel ist auf dem Rotor 2 zusätzlich eine Zusatzmasse in Form eines Zusatzmassenrings 11 vorgesehen. Der Zusatzmassenring 11 ist auf der Oberseite des Rotors 2 angebracht und erhöht damit die gesamte Schwungmasse des Rotors 2.

Da der Zusatzmassenring 11 ein separates Bauteil zu dem Rotor 2 beziehungsweise dem äußeren Lagerring 8 darstellt, ist es bei einer Herstellung der Drallradvorrichtung einfach möglich, durch Auswahl verschiedener Zusatzmassenringe 11 unterschiedliche zusätzliche Massen bereitzustellen, um unterschiedliche Schwungradeffekte zu erzielen.

Wenn, insbesondere in dem Fall einer schweren zusätzlichen Masse durch den Zusatzmassenring 11, die Masse des gesamten Rotors 2 groß ist, besteht die Möglichkeit, dass die magnetische Haltekraft des Magnetantriebs 4 nicht ausreicht, um ein Trennen des Wälzlagers 3 zu verhindern. Für diesen Fall kann es zweckmäßig sein, wenn zusätzlich ein in Fig. 1 nicht gezeigter Haltemagnetring an dem Rotor 2 oder an dem Träger 1 vorgesehen ist, um eine zusätzliche magnetische Haltekraft zwischen Rotor 2 und Träger 1 zu erzeugen. Da der Haltemagnetring keine zusätzlichen mechanischen beweglichen Teile aufweist, unterliegt er keinem Verschleiß. Darüber hinaus erzeugt er auch keine weiteren Vibrationen, die den Betrieb der Drallradvorrichtung beeinträchtigen könnten.

## Patentansprüche

1. Drallradvorrichtung zur Lagestabilisierung eines Raumflugkörpers; mit
- einem Träger (1);
- einem Rotor (2);
- einem Magnetantrieb (4) zum drehenden Antreiben des Rotors (2) relativ zu dem Träger (1); **gekennzeichnet durch**
- ein zwischen dem Rotor (2) und dem Träger (1) angeordnetes Wälzlager (3);
wobei
- durch den Magnetantrieb (4) eine magnetische Kraft zwischen dem Rotor (2) und dem Träger (1) erzeugbar ist, zum Vorspannen des Wälzlagers (3); und wobei
- der Außendurchmesser (A) des Rotors maximal das 2,5-fache des Wälzlagerdurchmessers (W) beträgt.

2. Drallradvorrichtung nach Anspruch 1, wobei der Rotor (2) derart gestaltet ist, dass der Außendurchmesser (A) des Rotors (2) ausgewählt ist aus der Gruppe:
- maximal das 2-fache des Wälzlagerdurchmessers (W),
- maximal das 1,5-fache des Wälzlagerdurchmessers (W),
- maximal das 1,3-fache des Wälzlagerdurchmessers (W),
- maximal das 1,2-fache des Wälzlagerdurchmessers (W),
- maximal das 1,0-fache des Wälzlagerdurchmessers (W).

3. Drallradvorrichtung nach Anspruch 1 oder 2, wobei der Magnetantrieb (4) aufweist:
- einen an dem Rotor (2) angeordneten, Magnetpole aufweisenden Magnetring (5);
- eine an dem Träger (1) gegenüber von dem Magnetring (5) angeordnete magnetische Rückschlusseinrichtung (7); und
- an dem Träger (1) zwischen dem Magnetring (5) und der magnetischen Rückschlusseinrichtung (7) angeordnete Magnetspulen (6).

4. Drallradvorrichtung nach einem der vorstehenden Ansprüche, wobei die magnetische Kraft bei einem Betrieb der Drallradvorrichtung zwischen dem Magnetring (5) und der Rückschlusseinrichtung (7) erzeugbar ist.

5. Drallradvorrichtung nach einem der vorstehenden Ansprüche, wobei genau ein Wälzlager (3) zwischen dem Rotor (2) und dem Träger (1) angeordnet ist.

6. Drallradvorrichtung nach einem der vorstehenden Ansprüche, wobei das Wälzlager (3) ausgebildet ist, um Radialkräfte und Axialkräfte aufzunehmen.

7. Drallradvorrichtung nach einem der vorstehenden Ansprüche, wobei das Wälzlager (3) aufweist:
- einen unteren Lagerring (9), der an dem Träger (1) angeordnet ist; und
- einen oberen Lagerring (8), der an dem Rotor (2) angeordnet ist;

8. Drallradvorrichtung nach einem der vorstehenden Ansprüche, wobei der obere Lagerring (8) einstückig an dem Rotor (2) ausgebildet ist.

9. Drallradvorrichtung nach einem der vorstehenden Ansprüche wobei an dem Rotor (2) eine Zusatzmasse (11) vorgesehen ist.

10. Drallradvorrichtung nach Anspruch 9, wobei die Zusatzmasse (11) als auf dem Rotor (2) angeordneter Zusatzmassenring (11) ausgebildet ist.

11. Drallradvorrichtung nach einem der vorstehenden Ansprüche, wobei an dem Rotor (2) oder auf dem Träger (1) ein zwischen dem Rotor (2) und dem Träger (1) wirkender Haltemagnet angeordnet ist, zum Bewirken einer magnetischen Haltekraft zwischen dem Rotor (2) und dem Träger (1).

12. Drallradvorrichtung nach einem der vorstehenden Ansprüche, wobei eine Schmiervorrichtung zum Schmieren des Wälzlagers vorgesehen ist.

## Claims

1. A flywheel device for position stabilization of a spacecraft, comprising
a carrier (1);
a rotor (2);
a magnetic drive (4) for driving the rotor (2) rotatingly relative to the carrier (1);
**characterized by**
a roller bearing (3) arranged between the rotor (2) and the carrier (1); wherein
a magnetic force for pre-stressing the roller bearing (3) can be generated between the rotor (2) and the carrier (1) by means of the magnetic drive (4); and wherein
the outer diameter (A) of the rotor is at maximum 2.5-times the roller bearing diameter (W).

2. The flywheel device according to claim 1, wherein the rotor (2) is formed such that the outer diameter (A) of the rotor (2) is selected from the group:
at maximum 2-times the roller bearing diameter (W),
at maximum 1.5-times the roller bearing diameter (W),
at maximum 1.3-times the roller bearing diameter (W),
at maximum 1.2-times the roller bearing diameter (W),
at maximum 1.0-times the roller bearing diameter (W).

3. The flywheel device according to claim 1 or 2, wherein the magnetic drive (4) comprises:
a magnetic ring (5) that is arranged at the rotor (2) and that comprises magnetic poles;
magnetic circuit closing means (7) that are arranged at the carrier (1) opposite to the magnetic ring (5); and
magnetic coils (6) arranged at the carrier (1) between the magnetic ring (5) and the magnetic circuit closing means (7).

4. The flywheel device according to one of the preceding claims, wherein the magnetic force can be generated during operation of the flywheel device between the magnetic ring (5) and the magnetic circuit closing means (7).

5. The flywheel device according to one of the preceding claims, wherein precisely one roller bearing (3) is arranged between the rotor (2) and the carrier (1).

6. The flywheel device according to one of the preceding claims, wherein the roller bearing (3) is formed in order to carry radial forces and axial forces.

7. The flywheel device according to one of the preceding claims, wherein the roller bearing (3) comprises:
a lower bearing ring (9) that is arranged at the carrier (1); and
an upper bearing ring (8) that is arranged at the rotor (2).

8. The flywheel device according to one of the preceding claims, wherein the upper bearing ring (8) is formed integrally at the rotor (2).

9. The flywheel device according to one of the preceding claims, wherein at the rotor (2) an additional mass (11) is provided.

10. The flywheel device according to claim 9, wherein the additional mass (11) is formed as an additional mass ring (11) that is arranged on the rotor (2).

11. The flywheel device according to one of the preceding claims, wherein at the rotor (2) or on the carrier (1) a holding magnet is arranged that acts between the rotor (2) and the carrier (1), in order to generate a magnetic holding force between the rotor (2) and the carrier (1).

12. The flywheel device according to one of the preceding claims, wherein a greasing device for greasing the roller bearing is provided.

## Revendications

1. Dispositif à roue d'inertie pour la stabilisation en position d'un engin spatial ; avec
- un support (1) ;
- un rotor (2) ;
- un entraînement magnétique (4) pour l'entraînement rotatif du rotor (2) par rapport au support (1) ; **caractérisé par**
- un palier à roulement (3) agencé entre le rotor (2) et le support (1) ;
dans lequel
- une force magnétique entre le rotor (2) et le support (1) peut être générée par l'entraînement magnétique (4) pour la précontrainte du palier à roulement (3) ; et dans lequel
- le diamètre extérieur (A) du rotor s'élève au maximum à 2,5 fois le diamètre du palier à roulement (W).

2. Dispositif à roue d'inertie selon la revendication 1, dans lequel le rotor (2) est conçu de telle manière que le diamètre extérieur (A) du rotor (2) soit sélectionné dans le groupe :
- au maximum 2 fois le diamètre du palier à roulement (W),
- au maximum 1,5 fois le diamètre du palier à roulement (W),
- au maximum 1,3 fois le diamètre du palier à roulement (W),
- au maximum 1,2 fois le diamètre du palier à roulement (W),
- au maximum 1,0 fois le diamètre du palier à roulement (W).

3. Dispositif à roue d'inertie selon la revendication 1 ou 2, dans lequel l'entraînement magnétique (4) présente :
- un anneau magnétique (5) présentant des pôles magnétiques, agencé au niveau du rotor (2) ;
- un dispositif de retour magnétique (7) agencé au niveau du support (1) en face de l'anneau magnétique (5) ; et
- des bobines magnétiques (6) agencées au niveau du support (1) entre l'anneau magnétique (5) et le dispositif de retour magnétique (7).

4. Dispositif à roue d'inertie selon l'une quelconque des revendications précédentes, dans lequel la force magnétique peut être générée entre l'anneau magnétique (5) et le dispositif de retour (7) lors d'un fonctionnement du dispositif à roue d'inertie.

5. Dispositif à roue d'inertie selon l'une quelconque des revendications précédentes, dans lequel précisément un palier à roulement (3) est agencé entre le rotor (2) et le support (1).

6. Dispositif à roue d'inertie selon l'une quelconque des revendications précédentes, dans lequel le palier à roulement (3) est réalisé afin de recevoir des forces radiales et des forces axiales.

7. Dispositif à roue d'inertie selon l'une quelconque des revendications précédentes, dans lequel le palier à roulement (3) présente :
- un anneau de palier inférieur (9) qui est agencé sur le support (1) ; et
- un anneau de palier supérieur (8) qui est agencé sur le rotor (2).

8. Dispositif à roue d'inertie selon l'une quelconque des revendications précédentes, dans lequel l'anneau de palier supérieur (8) est réalisé d'un seul tenant au niveau du rotor (2).

9. Dispositif à roue d'inertie selon l'une quelconque des revendications précédentes, dans lequel une masse supplémentaire (11) est prévue sur le rotor (2).

10. Dispositif à roue d'inertie selon la revendication 9, dans lequel la masse supplémentaire (11) est réalisée comme anneau de masse supplémentaire (11) agencé sur le rotor (2).

11. Dispositif à roue d'inertie selon l'une quelconque des revendications précédentes, dans lequel un aimant de retenue agissant entre le rotor (2) et le support (1) est agencé sur le rotor (2) ou sur le support (1) pour provoquer une force de retenue magnétique entre le rotor (2) et le support (1).

12. Dispositif à roue d'inertie selon l'une quelconque des revendications précédentes, dans lequel un dispositif de lubrification est prévu pour la lubrification du palier à roulement.
